# EUROPÄISCHE PATENTSCHRIFT

(11) **EP 2 805 800 B1**
(45) Veröffentlichungstag und Bekanntmachung des Hinweises auf die Patenterteilung: **16.09.2015**
(21) Anmeldenummer: 13168793.1
(22) Anmeldetag: 22.05.2013
(51) Int. Cl.: B25J 9/16, B23K 26/08

(54) **Fügen eines Werkstücks mit versteckter Fügenaht**
Joining of a workpiece with concealed seam
Assemblage d'une pièce à usiner avec une jonction cachée

(43) Veröffentlichungstag der Anmeldung: 26.11.2014
(73) Patentinhaber: FFT EDAG Produktionssysteme GmbH & Co. KG, 36041 Fulda (DE)
(72) Erfinder: Kraft, Martin, 36124 Eichenzell (DE); Schneegans, Dr. Jochen, 56237 Wittgert (DE)
(74) Vertreter: Schwabe - Sandmair - Marx

(56) Entgegenhaltungen:
- DE-C1- 4 402 345
- PIRES J N ET AL: "Welding Robots: Technology, System Issues and Applications", 1. Januar 2006 (2006-01-01), 20060101, PAGE(S) 1-11, XP002522826, ISBN: 978-1-85233-953-1 * das ganze Dokument *
- SICARD P, LEVINE M D: "An approach to an expert robot welding system", IEEE TRANSACTIONS ON SYSTEMS, MAN AND CYBERNETICS USA, Bd. 18, Nr. 2, 3. September 1988 (1988-09-03), Seiten 204-222, XP002713912, ISSN: 0018-9472, DOI: 10.1109/21.3461

## Beschreibung

Die Erfindung betrifft ein Verfahren zum Fügen verdeckter Werkstückteile mittels eines Energiestrahls.

Es ist eine Fügetechnik bekannt, bei der zwei Teile in einem Bereich miteinander gefügt werden sollen, in dem das eine Teil auf dem anderen aufliegt, sodass die Fügenaht zur Verbindung der beiden Teile durch das oben aufliegende Teil hindurch erzeugt werden muss. Dabei wird die relative Position der beiden Teile zueinander im Regelfall durch Vermessungen der Teile und das Vermessen der Positionen der beiden Teile relativ zueinander in der Fügeposition bestimmt.

Wenn die beiden Teile in der Fügestation in der Fügeposition eingemessen sind, kann ein Energiestrahl eine vorgegebenen Fügebahn entlang der Fügestruktur abfahren und die beiden Teile fügen. Durch zum Beispiel ein Aufaddieren zulässiger Fertigungstoleranzen an den Werkstückteilen kann dabei die Fügenaht in einer Position gesetzt werden, in der eine sichere dauerhafte Verbindung der Werkstückteile nicht gewährleistet ist. Diese fehlerhaften Werkstücke können in der Qualitätskontrolle entdeckt und ausgesondert oder einer Nachbearbeitung zugeführt werden. Dieser zusätzliche Arbeitsgang kostet Zeit und erhöht daher die Kosten.

Aus der DE 10 2007 062 535 A1 ist Verfahren zum Strahlfügen zweier Werkstückteile bekannt. Dabei wird eine Fügekontur an einem unteren Werkstückteil von einem oberen Werkstück verdeckt, sodass die Fügenaht zum Fügen des unteren und oberen Werkstückteils gesetzt werden muss, ohne dass inline überwacht werden kann, ob die Fügenaht richtig gesetzt wird. Das Verfahren umfasst eine Vermessen und Ausrichten der Werkstücke vor dem Beginn des Strahlfügens.

Das Vermessen und Ausrichten jedes Werkstückes ist zeitaufwändig, wodurch eine Taktzeit in einer Produktionslinie zum Beispiel verlängert werden kann. Diese verlängerte Taktzeit führt zu einem geringeren Durchsatz pro Zeiteinheit und erhöht damit die Kosten.

Es besteht daher ein Bedarf an einem Verfahren mit dem eine Position einer verdeckten Fügestruktur vor Beginn des Fügens erfasst werden kann, ohne dass die Werkstücke aufwändig vermessen werden müssen.

Diese Aufgabe wird durch das Verfahren nach dem Anspruch 1 gelöst. Weitere Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Ein Aspekt der Erfindung betrifft ein Verfahren zum Fügen verdeckter Werkstückteile mittels eines Energiestrahls, bei dem in einem ersten Schritt ein Werkstückunterteil und ein Werkstückoberteil relativ zueinander positioniert werden. Dabei kontaktiert das Werkstückoberteil das Werkstückunterteil im positionierten Zustand flächig oder linienförmig längs einer Fügekontur des Werkstückunterteils und verdeckt dabei die Fügekontur. Ein Soll-Verlauf der Fügekontur ist in einer Steuerung für den Energiestrahl in Bezug auf ein Koordinatensystems bekannt.

Das Werkstückoberteil bildet mit dem Werkstückunterteil einen gemeinsamen Fügekontakt und der Energiestrahl wird auf eine vom Werkstückunterteil abgewandte Oberseite des Werkstückoberteils gerichtet und von einer Steuerung längs der Fügekontur oder des Fügekontakts bewegt, um das Werkstückoberteil mit der Fügekontur des Werkstückunterteils stoffschlüssig zu fügen.

Vor dem Beginn des eigentlichen Fügens des Werkstückoberteils mit dem Werkstückunterteil wird mit dem Energiestrahl eine Suchnaht auf der Oberseite des Werkstückoberteils zur Detektion der Fügekontur, respektive deren genaue Position und Ausrichtung, erzeugt.

Mittels eines Detektors wird ein Übergang detektiert, an dem ein Flächenbereich des Werkstückoberteils, der keinen Kontakt mit dem Werkstückunterteil hat, an einen Flächenbereich des Werkstückoberteils, der einen Kontakt mit der Fügekontur hat, grenzt. Von der Steuerung wird eine Position des Übergangs registriert und mit einer in der Steuerung abgespeicherten Soll-Position des Übergangs verglichen.

Stellt die Steuereinheit eine von der in der Steuerung hinterlegten Soll-Position abweichende Ist-Position des Übergangs fest, wird ein Soll-Verlauf des Energiestrahls entlang der Fügekontur korrigiert.

Die Suchnaht kann sich von ihrem Anfang bis zur Detektion eines ersten Übergangs und darüber hinaus erstrecken. Insbesondere kann die Suchnaht sich von dem Flächenbereich des Werkstückoberteils, der keinen Kontakt zu dem Werkstückunterteil hat, über den Flächenbereich des Werkstückoberteils, der Kontakt mit der Fügekontur hat, in einem weiteren Flächenbereich des Werkstückoberteils, der keinen Kontakt zu dem Werkstückunterteil hat, erstrecken. Das heißt, die Suchnaht kann einen ersten Übergang aufweisen, wenn die Suchnaht von dem Flächenbereich des Werkstückoberteils, der keinen Kontakt zu dem Werkstückoberteil hat, in den Flächenbereich des Werkstückoberteils, der Kontakt mit der Fügekontur hat, übergeht, und einen zweiten Übergang auf einer gegenüberliegenden Seite des Werkstückoberteils mit Kontakt zu der Fügestruktur, wenn die Suchnaht von dem Flächenbereich des Werkstückoberteils, der Kontakt mit der Fügestruktur hat, in einen weiteren Flächenbereich des Werkstückoberteils ohne Kontakt zu der Fügestruktur übergeht.

Von dem Detektor kann ein für die Suchnaht charakteristischer Parameter, insbesondere ein physikalischer oder chemischer Parameter, detektiert und überwacht werden. Solch ein Parameter kann beispielsweise eine Wärmefeld der Suchschweißnaht, eine Stromstärke, eine Stromspannung oder eine Gasflussmenge sein.

Der Detektor kann zum Beispiel ein optischer Detektor sein, der dem Energiestrahl in einem kurzen Abstand folgt oder seitlich von dem Energiestrahl angeordnet ist. Der Detektor kann bereits während der Energiestrahl die Suchnaht erzeugt zum Beispiel eine Wärmeverteilung in der Suchnaht erfassen.

Der oder die von dem Detektor detektierte Wert/e des/der Parameter kann/können sich an dem Übergang sprungartig verändern. Diese sprungartige Veränderung zeigt an, dass sich an dieser Stelle der Übergang oder ein Übergangspunkt von dem Flächenbereich des Werkstückoberteils, der keinen Kontakt mit dem Werkstückunterteil hat, zu einen Flächenbereich des Werkstückoberteils, der einen Kontakt mit der Fügekontur hat, befindet. Dabei erfasst der Detektor zum Beispiel eine Kante der Fügekontur oder einen anderen insbesondere in einer Linie an dem Werkstückoberteil anliegenden Bereich der Fügestruktur. Das heißt, die Suchnaht erstreckt sich auf der dem Energiestrahl zugewandten Oberseite des Werkstückoberteils bis in den Flächenbereich des Werkstückoberteils, der die von oder an dem Werkstückunterteil gebildete Fügestruktur verdeckt.

Die detektierte sprungartige Veränderung des oder der Parameter/s an dem Übergang oder Übergangspunkt kann von der Steuerung erkannt und registriert werden. Dabei bedeutet registrieren, dass der Übergang in einem zum Beispiel kartesischen Koordinatensystem, in dem die Maße und Richtungen des Werkstückoberteils und des Werkstückunterteils bekannt sind, bezüglich seiner x-, y. und z-Richtung festgelegt wird.

Um eine möglichst exakte Position zu erhalten, kann die Steuerung einen Filteralgorithmus aufweisen, der die Daten des oder der von dem Detektor erfassten Daten bearbeitet, um bekannte Störungen in den erfassten Daten zumindest teilweise zu eliminieren.

Um insbesondere bei einer gewundenen oder winkeligen Fügekontur deren genaue Lage unter dem Werkstückoberteil zu erfassen, kann es vorteilhaft sein, mittels des Energiestrahls wenigstens zwei Suchnähte auf der Oberseite des Werkstückoberteils zu erzeugen, von den sich wenigstens eine von dem Flächenbereich des Werkstückoberteils, der keinen Kontakt zu dem Werkstückunterteil hat, über den Flächenbereich des Werkstückoberteils, der Kontakt mit der Fügekontur hat, in einem weiteren Flächenbereich des Werkstückoberteils, der keinen Kontakt zu dem Werkstückunterteil hat, und die andere sich wenigstens von dem Flächenbereich des Werkstückoberteils, der keinen Kontakt zu dem Werkstückunterteil hat, in den Flächenbereich des Werkstückoberteils, der Kontakt mit der Fügekontur hat, erstreckt. Dadurch werden von dem Detektor wenigstens zwei Übergänge detektiert und von der Steuerung Ist-Positionen von wenigstens zwei Übergängen oder Übergangspunkten registriert. Die Ist-Positionen der Übergänge können dann mit den in dem Rechner abgespeicherten SollPositionen der Übergänge verglichen werden, sodass ein tatsächlicher Verlauf einer verdeckten gewundenen oder gewinkelten Fügekontur eines Werkstücks bestimmt werden kann.

Statt der zwei Suchnähte können auch drei oder mehr Suchnähte von dem Energiestahl gesetzt und durch den Detektor mehr als drei Übergänge detektiert und von der Steuerung registriert werden. Da jede weitere Suchnaht aber einen erhöhten Material- und/oder Energieverbrauch bedeutet, und somit Zeit und damit Geld kostet, können im Vorfeld der Anwendung des Verfahrens für jedes Werkstück und jede Fügekontur eine notwenige Anzahl an Suchnähten bestimmt und der Beginn jeder Fügenaht, deren Richtung und Länge festgelegt werden.

Wenn alle vorgegebenen Übergänge von der Steuerung registriert wurden, kann die Steuerung die Ist-Position der vom Werkstückoberteil verdeckten Fügekontur bestimmen, mit einer Soll-Position der Fügekontur vergleichen und bei einer Abweichung zwischen Ist- und Soll-Position der Fügekontur einen in der Steuerung abgespeicherte Fügebahn des Energiestrahls korrigieren. Der Energiestrahl kann dann von der Steuerung auf der Oberseite des Werkstückoberteils entlang der Ist-Position der Fügekontur geführt werden, um das Werkstückoberteil mit dem Werkstückunterteil in der verdeckten Fügekontur zu verbinden.

Alternativ kann die Bewegung des Energiestrahls nach dem Detektieren und Registriereren eines ersten oder eines ersten und eines zweiten Übergangs korrigiert werden und die Suchnaht kann ohne Unterbrechung der Bewegung des Energiestrahls in eine Fügenaht längs der Fügekontur übergehen. Das heißt, dass die Steuereinheit bereits bei einem Vergleich der Ist-Position mit der Soll-Position des ersten Übergangs, an dem der Flächenbereich des Werkstückoberteils, der keinen Kontakt zu dem Werkstückunterteil hat, in den Flächenbereich des Werkstückoberteils, der Kontakt mit der Fügekontur hat, wechselt, die erfasste und registrierte Ist-Position mit der vorgegebenen Soll-Position der Fügekontur vergleicht, und gegebenenfalls den in der Steuerung abgespeicherten Verlauf des Energiestrahls entlang der Fügekontur in der Soll-Position ein erstes Mal korrigiert.

Wenn von dem Detektor während des Fügens des Werkstückoberteils mit dem Werkstückunterteil detektiert wird, dass der Energiestrahl von dem Flächenbereich des Werkstückoberteils, der Kontakt mit der Fügekontur hat, in einen Flächenbereich des Werkstückoberteils, der keinen Kontakt zu dem Werkstückunterteil hat, wechselt, wird der in der Steuerung bereits einmal korrigierte Verlauf des Energiestrahls entlang der Fügekontur in der Soll-Position ein zweites Mal korrigiert. Dieser Vorgang kann so oft wiederholt werden, bis der Energiestrahl sich nur noch in dem Flächenbereich des Werkstückoberteils bewegt, der Kontakt mit der Fügestruktur hat.

Das heißt, der Energiestrahl wird durch die Steuerung in einer mäanderförmigen Bewegung auf einen Ist-Verlauf der Fügestruktur eingependelt.

Zum Erzeugen der Fügenaht kann der Energiestahl eine höhere oder niedrigere Energie aufweisen als zum Erzeugen der Suchnaht. Die Suchnaht kann mit einer Energie erzeugt werden, bei der sicher gewährleistet ist, dass sich wenigstens ein charakteristischer Parameter der Suchnaht sprunghaft ändert, wenn der Energiestrahl von dem Flächenbereich des Werkstückoberteils, der keinen Kontakt zu dem Werkstückunterteil hat, in den Flächenbereich des Werkstückoberteils, der Kontakt mit der Fügekontur hat, wechselt, oder umgekehrt. Wenn die Suchnaht ohne Unterbrechung in die Fügenaht übergeht, kann die Energie des Energiestrahls zum Beispiel von einem Suchnahtenergiewert auf einen Fügenahtenergiewert erhöht oder verringert werden, wenn der Energiestrahl der Detektor den ersten Übergang detektiert oder zu einem späteren zum Beispiel in der Steuerung vorgegebenen Zeitpunkt.

Alternativ oder zusätzlich kann sich die Geschwindigkeit, mit der sich der Energiestrahl über die ihm zugewandte Oberseite des Werkstückoberteils bewegt, beim Erzeugen der Suchnaht und der Fügenaht unterscheiden. Beim Erzeugen der Suchnaht kann der Energiestrahl zum Beispiel mit einer höheren oder niedrigeren Geschwindigkeit bewegt werden, als beim Erzeugen der Fügenaht.

Generell gilt während des gesamten Verfahrens, dass von dem Detektor Übergänge detektiert, von der Steuerung die Positionen der Übergänge registriert und mit den in der Steuerung abgespeicherten Positionen der Übergänge verglichen werden, und dass bei einer abweichenden Position wenigstens eines der Übergänge die Bewegung des Energiestrahls längs der Fügekontur korrigiert wird, um den Energiestrahl in oder zurück in den Flächenbereich des Werkstückoberteils, der Kontakt mit der Fügekontur hat, zu führen.

Die Suchnaht kann schräg oder quer zu der in der Steuereinrichtung gespeicherten Fügekontur erzeugt werden.

Insbesondere beim Erzeugen der Suchnaht, die im Wesentlichen quer zu der Fügestruktur verläuft, kann der Energiestrahl das Werkstückoberteil mit der Fügekontur des Werkstückunterteils wenigstens punktuell stoffschlüssig verbinden oder heften. Dadurch wird das Werkstückoberteil punktuell mit der Fügestruktur verbunden und ist für das folgende Fügen festgelegt.

Bei dem Detektor kann es sich um einen Detektor eines Qualitätsüberwachungssystems für Fügenähte handelt. Insbesondere handelt es sich um ein Qualitätsüberwachungssystem das inline die Qualität einer Fügenaht überwachen kann. Wobei "inline" bedeutet, dass die Qualitätskontrolle im Wesentlichen gleichzeitig mit der Erzeugung der Fügenaht, respektive der Suchnaht durchgeführt wird.

Bei dem Fügeverfahren kann es sich um ein Schweiß-, Löt- oder Klebeverfahren handelt. Bei dem Klebeverfahren kann ein Klebstoff verwendet werden, der auf die Fügekontur aufgetragen und durch die Wärme des Energiestrahls aktiviert wird. Dabei kann beim Klebeverfahren und beim Lötverfahren die Energie des Energiestrahls zum Erzeugen der Suchnaht ausreichend sein, um den Kleber zu aktivieren oder das Lot zu schmelzen. Das heißt, die oben zum Fügeverfahren beschriebene Erhöhung der Energie des Energiestrahls kann beim Klebe- und/oder Lotverfahren unterbleiben, wenn der Energiestrahl ohne Unterbrechung von der Suchnaht in die Fügenaht übergeht und sich mäanderförmig auf der Fügekontur, respektive auf den Flächenbereich der Oberfläche des Werkstückoberteils, der die Fügekontur kontaktiert, einpendelt.

Das Schweißverfahren kann zum Beispiel ein Lichtbogenschweißverfahren mit abschmelzender Elektrode (MIG, MAG), ein Laserschweißverfahren, ein Hochfrequenz-Induktions-Schweißverfahren, ein Plasmaschweißverfahren oder ein anderes geeignetes Schweißverfahren sein.

Grundsätzlich kann das beschriebene Verfahren vorteilhaft zum Fügen zweier beliebiger Werkstücke an einer verdeckten Naht eingesetzt werden. Das Werkstückoberteil und das Werkstückoberteil können dabei aus dem gleichen Material gebildet sein, zum Beispiel aus Metall oder aus Kunststoff. Bei dem Metall kann es sich unter anderem um einen Stahldünnwandguss oder einen Metallguss handeln. Das Werkstückoberteil kann aber auch aus einem anderen Material gebildet sein als das Werkstückunterteil mit der Fügestruktur.

Das Werkstückunterteil kann zum Beispiel ein Teil einer Kraftfahrzeugstruktur oder einer Kraftfahrzeugkarosserie und das Werkstückoberteil ein Teil einer Kraftfahrzeugstruktur oder einer Kraftfahrzeugkarosserie sein. Das heißt, das Verfahren kann vorteilhaft in einer Produktionslinie für Massenprodukte wie Kraftfahrzeuge eingesetzt werden.

Zum Fügen des Werkstückunterteils mit dem Werkstückoberteil kann das Werkstückunterteil und/oder das Werkstückoberteil in eine Fügestation eingelegt und bevorzugt in der Fügestation oder vor dem Einlegen in die Fügestation relativ zueinander fixiert werden, wobei die Fügestation eine stationäre Fügestation ist oder eine mit einem Roboterarm verbundene Fügestation, die beim Fügen durch den Roboterarm im Raum bewegt wird.

Die Fügestation kann so gebildet sein, dass das Werkstückunterteil und das Werkstückoberteil nach dem Einlegen in die Fügestation und/oder dem Fixieren in einer bekannten Position in einem Koordinatensystem, zum Beispiel einem kartesischen Koordinatensystem, liegen. Diese bekannte Position kann in die Steuereinheit eingelesen und dort abgespeichert werden. Das heißt, die Steuerung kennt die theoretischen Position und den theoretischen Verlauf der an der von dem Werkstückoberteil verdeckten Fügekontur an dem Werkstückunterteil und kann den Energiestrahl entlang der Fügekontur führen. Durch zum Beispiel eine Addition von zulässigen Toleranzen an dem Werkstückoberteil und dem Werkstückunterteil kann die Fügekontur nicht an der in der Steuerung abgespeicherten Soll-Position liegen. Dadurch kann es sein, dass die Steuerung den Energiestrahl nicht sicher entlang der Fügekontur führt und dadurch die erzeugte Fügenaht Mängel aufweist. Um die verdeckte Fügekontur, respektive deren Ist-Position aufzufinden, kann mittels des Energiestrahls wie oben beschrieben die Suchnaht auf der Oberseite des Werkstückoberteils erzeugt werden.

Zum Erzeugen der Suchnaht und der Fügenaht können ein strahlabgebender Teil einer den energiereichen Strahl erzeugenden Anlage und/oder der Detektor der Qualitätskontrollvorrichtung an einem Roboterarm befestigt sein und ein kombiniertes Füge- und Kontrollwerkzeug bilden. Der Roboterarm kann im Raum frei beweglich sein.

Wenn die zu fügenden Teile im Raum frei beweglich mit jeweils einem Roboterarm verbunden sind und das kombinierte Füge- und Kontrollwerkzeug ein stationäres Werkzeug ist oder im Raum frei beweglich mit einem weiteren Roboterarm verbunden ist, kann das Fügen des Werkstückunterteils mit dem Werkstückoberteil als fliegendes Fügen durchgeführt werden.

Ein Verfahren und eine Vorrichtung zum spannrahmenlosen Fügen von Bauteilen ist aus der WO 2009/140977, eine internationale Anmeldung der Anmelderin, bekannt und wird hier ausdrücklich in Bezug genommen.

Ein weiterer Aspekt der Erfindung betrifft ein Computerprogramm zur Durchführung des oben beschrieben Verfahrens.

Der Computer kann eine mit einem Speichersystem und einem Bussystem datenverbundene digitale Mikroprozessoreinheit (CPU), einen Arbeitsspeicher (RAM) sowie ein Speichermittel besitzen. Die CPU ist ausgebildet, Befehle, die als ein in einem Speichersystem abgelegtes Programm ausgeführt sind, abzuarbeiten, Eingangssignale vom Datenbus zu erfassen und Ausgangssignale an den Datenbus abzugeben. Das Speichersystem kann verschiedene Speichermedien wie optische, magnetische, Festkörper- und andere nicht-flüchtige Medien besitzen, auf dem ein entsprechendes Computerprogramm zur Durchführung des Verfahrens sowie der vorteilhaften Ausgestaltungen gespeichert ist. Das Programm kann derart beschaffen sein, dass es die hier beschriebenen Verfahren verkörpert bzw. auszuführen imstande ist, sodass die CPU die Schritte solcher Verfahren ausführen kann und damit den Energiestrahl der Fügevorrichtung steuern kann.

Zur Durchführung eines Verfahrens geeignet ist ein Computerprogramm, welches Programmcode-Mittel aufweist, um alle Schritte des Verfahrens durchzuführen, wenn das Programm auf einem Computer ausgeführt wird.

Das Computerprogramm kann mit einfachen Mitteln in bereits bestehende Steuereinheiten eingelesen und verwendet werden, um ein Verfahren zum Fügen eines Werkstücks entlang einer verdeckten Fügenaht zu steuern.

Ein weiterer Aspekt der Erfindung betrifft ein Computerprogrammprodukt mit Programmcodemitteln, die auf einem computerlesbaren Datenträger gespeichert sind, um das oben beschriebenen Verfahren durchführen zu können, wenn die Programmcodemittel auf einem Computer ausgeführt werden.

Das Computerprogrammprodukt kann als auch Nachrüstoption in Steuereinheiten integriert werden.

Für die gesamte Beschreibung und die Ansprüche gilt, dass der Ausdruck "ein" als unbestimmter Artikel benutzt wird und die Anzahl von Teilen nicht auf ein einziges beschränkt. Sollte "ein" die Bedeutung von "nur ein" haben, so ist dies für den Fachmann aus dem Kontext zu verstehen oder wird durch die Verwendung geeigneter Ausdrücke wie z.B. "ein einziger" eineindeutig offenbart.

Nachfolgend wird ein Ausführungsbeispiel anhand der Zeichnung näher erläutert. Es zeigen:
Figur 1: Werkstück mit zwei Suchnähten
Figur 2: Werkstück der Figur 1 in einer perspektivischen Seitenansicht
Figur 3: Werkstück mit alternativer Suchnaht
Figur 4: Detailansicht eines Energiestrahls und eines Detektors beim Setzen einer Suchnaht
Figur 5: Stationäre Fügestation mit Fügeroboter
Figur 6: Beispielhafte Messkurve beim Detektieren eines Übergangs

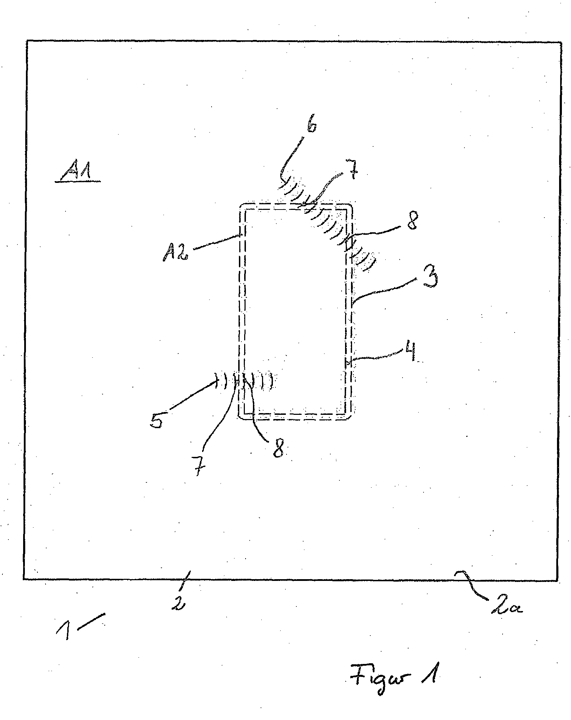

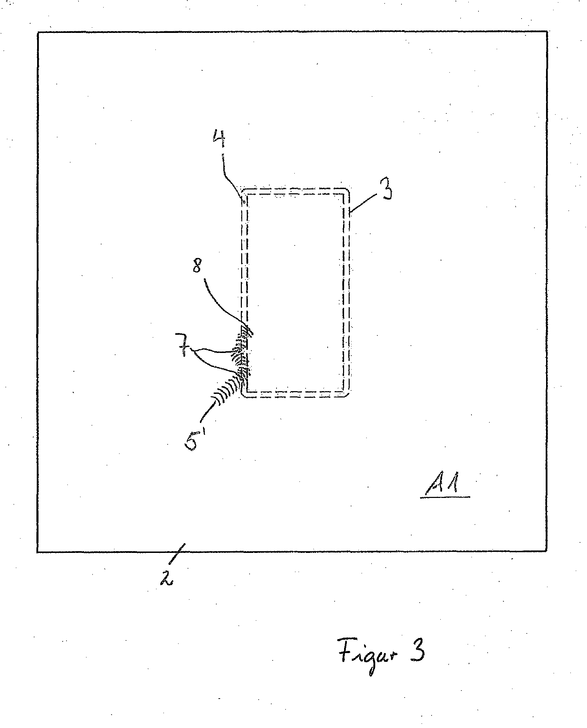

In der Figur 1 ist ein Werkstück 1 bestehend aus einem Werkstückoberteil 2 und einem Werkstückunterteil 3 dargestellt. Das Werkstückoberteil 2 liegt auf dem Werkstückunterteil 3, sodass ein in der Figur 3 gezeigter Energiestrahl 10 die Fügekontur 4 entlang der das Werkstückoberteil 2 das Werkstückunterteil 3 kontaktiert nicht direkt bearbeiten kann.

Um eine genaue Position des Werkstückunterteil 3 relativ zu dem Werkstückoberteil 2 bestimmen zu können, wurden auf einer dem Energiestrahl 10 zugewandten Oberseite 2a des Werkstückoberteils 2 im Ausführungsbeispiel mittels des Energiestrahls 10 zwei Suchnähte 5, 6 erzeugt.

Da die ungefähre Position des Werkstückunterteils 3 hinsichtlich allgemeiner Fügetoleranzen relativ zu dem Werkstückoberteil 2 bekannt ist, kann der Energiestrahl 10 den Anfang der Suchnaht 5, 6 auf der Oberfläche 2a des Werkstückoberteils 2 in einem Bereich setzen, der bereits nahe an der Fügekontur 4 liegt. Dabei wird die Suchnaht 5, 6 im Wesentlichen quer zu der Fügekontur 4 gesetzt oder im Bereich einer Ecke oder Kurve der Fügekontur 4, sodass sie die Fügekontur 4 vor und hinter der Ecke erfassen kann.

Beim Erzeugen der Suchnaht 5, 6 kann die Suchnaht 5, 6, respektive wenigstens ein typischer Parameter der Suchnaht 5, 6, durch einen in der Figur 3 gezeigten Detektor 11 überwacht werden. Wenn die Suchnaht 5, 6 von einem Flächenbereich A1 des Werkstückoberteils 2, das keinen Kontakt mit dem Werkstückunterteil 3 hat, in einen Flächenbereich A2 wechselt, in dem das Werkstückoberteil 2 die der Fügekontur 4 kontaktiert, ändert sich der vom Detektor 11 überwachte wenigstens eine Parameter der Suchnaht 5, 6 sprungartig. Gleiches gilt für den umgekehrten Fall, wenn die Suchnaht 5, 6 von dem Flächenbereich A2 in den Flächenbereich A1 wechselt.

Das heißt, mit dem Detektor 11 können Übergangs- oder Kontaktpunkte 7, 8 erfasst werden, in denen die Suchnaht von dem Flächenbereich A1 oder A2 in den Flächenbereich A2 oder A1 wechselt. Da die Lage des Werkstückunterteils 3 und des Werkstückoberteils 2 in einem Referenzsystem, wie einem kartesischen Koordinatensystem, zum Beispiel einer Fügestation 9 bekannt sind, können die Positionen der Kontaktpunkte 7, 8 exakt erfasst werden. Aus den Positionen der Kontaktpunkte 7, 8 ergibt sich dann eine Ist-Position des Werkstückunterteils 3 zu dem Werkstückoberteil 2.

Mit den bekannten Positionen der Kontaktpunkte 7, 8 der Suchnaht 5, 6 oder Suchnähte 5, 6 kann eine in einem in der Figur 1 nicht gezeigten Rechner 18 abgespeicherte Soll-Position des Werkstückunterteils 3 zum Werkstückoberteil 2, respektive eine vorgegebene Soll-Fügebahn des Energiestrahls 10 in eine Ist-Fügebahn für den Energiestrahl 10 korrigiert werden.

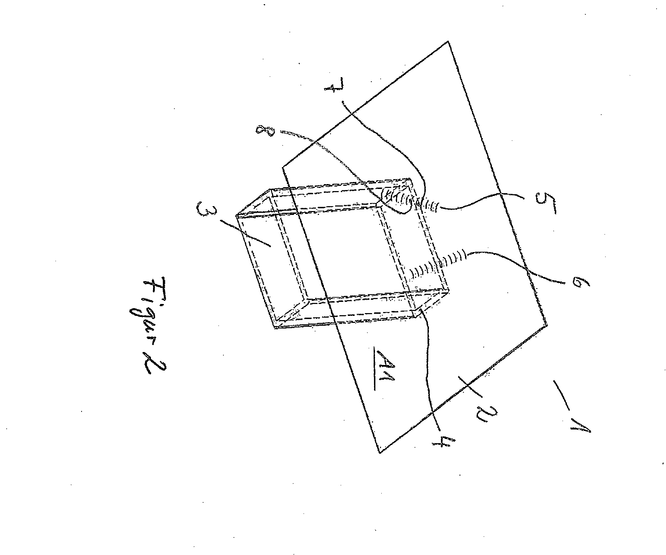

Die Figur 2 zeigt das Werkstück 1 der Figur 1 in einer perspektivischen Ansicht. Die Position der Fügekontur 4 des Werkstückunterteils 3, respektive der Auflagebereich des Werkstückoberteils 2 auf der Fügekontur 4 des Werkstückunterteils 3, ist durch die gestrichelten Linien dargestellt. Die Suchnähte 5, 6 verlaufen von einem Flächenbereich A1, in dem das Werkstückoberteil 2 das Werkstückunterteil 3 nicht kontaktiert, über einen Flächenbereich A2, in dem das Werkstückoberteil 2 die Fügekontur 4 des Werkstückünterteils 3 kontaktiert in einen weiteren Flächenbereich A1. Dabei werden, wie bereits zur Figur 1 beschrieben, die Kontaktpunkte 7, 8 an den Übergängen von einem Flächenbereich A1 in einen Flächenbereich A2 und von einem Flächenbereich A2 in einen Flächenbereich A1 von dem nicht dargestellten Detektor 11 detektiert und aus einer Ist-Position der Kontaktpunkte 7, 8 eine aktuelle Position und Ausrichtung des Werkstückunterteils 3 relativ zum Werkstückoberteil 2 berechnet. Diese berechnete Position und Ausrichtung des Werkstückunterteils 3 dient dann als Grundlage für eine Berechnung einer von dem nicht gezeigten Energiestrahl 10 abzufahrenden Fügebahn.

In der Figur 3 ist eine alternative Suchnaht 5' gezeigt. Die Suchnaht 5' wird in einem spitzen Winkel zu der Fügekontur 4 erzeugt. Detektiert der Detektor 11 jetzt einen Kontaktpunkt 7, 8, wird die in dem Rechner 18 abgespeicherte Soll-Fügebahn des Energiestrahls 10 sofort korrigiert und der Energiestrahl 10 schwenkt in Richtung der Ist-Position der Fügekontur 4. Detektiert der Detektor 11 kurz darauf einen weiteren Kontaktpunkt 7, 8 führt dies zu einer weiteren Korrektur der Fügebahn des Energiestrahls 10. Dieser Vorgang kann sich mehrfach wiederholen, bis der Energiestrahl 10, wie in der Figur 2 gezeigt, durch die mäanderförmig Bewegung auf die korrekte Ist-Fügebahn zum Fügen des Werkstücks 1 eingependelt ist.

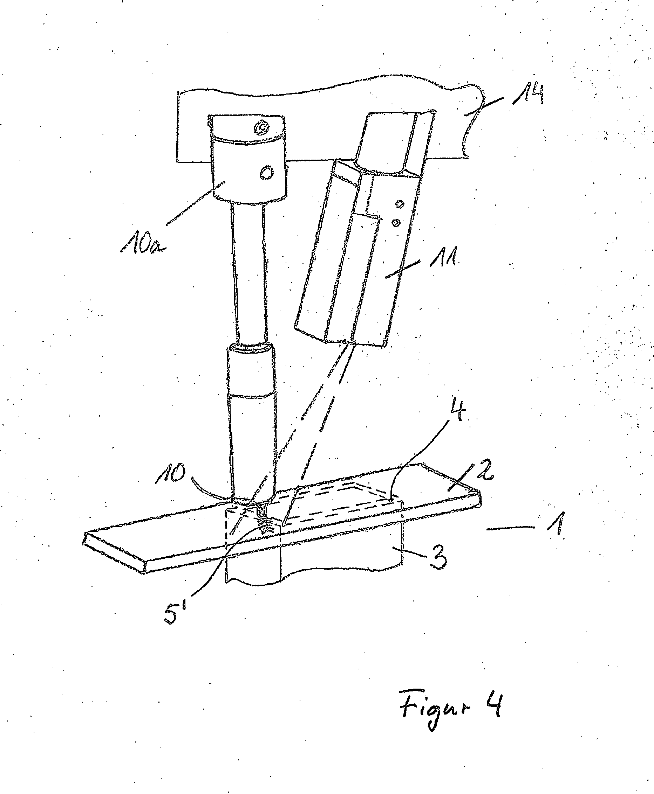

Die Figur 4 zeigt das Erzeugen einer Suchnaht 5, 6 mit dem Energiestrahl 10 und die gleichzeitige Überwachung wenigstens eines typischen Parameters der Suchnaht 5, 6 durch den Detektor 11.

Bei dem Energiestrahl 10 handelt es sich im dargestellten Ausführungsbeispiel um einen Laserstrahl, der Detektor 11 ist ein optischer Detektor 11 einer Qualitätssicherungsvorrichtung mit der die Qualität einer Schweißnaht inline, das heißt, beim oder kurz nach dem Erzeugen der Schweißnaht, überwacht werden kann.

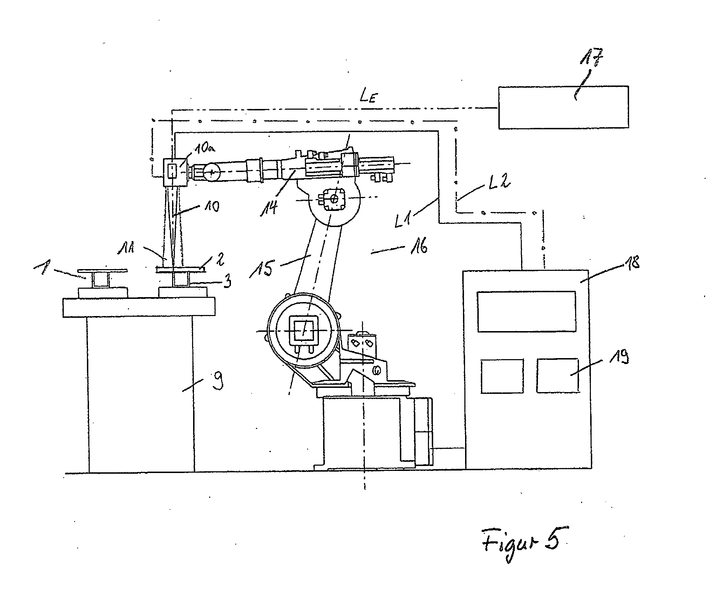

Eine den Energiestrahl 10 abgebende Vorrichtung 10a und der Detektor 11 sind im Ausführungsbeispiel an einem gemeinsamen Werkzeugkopf 14 befestigt, der, wie es die Figur 5 zeigt, an einem Roboterarm 15 eines Industrieroboters 16 befestigt ist. Der Roboterarm 15 kann das kombinierte Füge- und Detektionswerkzeug im Raum bewegen und sowohl entlang einer Suchnaht 5, 6 als auch entlang einer Fügenaht gemäß der Figuren 1 und 3 bewegen. Während die Suchnähte 5, 6 der Figur 1 erst erzeugt werden und der Energiestrahl 10 und der Detektor 11 danach an einen vorgegebenen Anfangspunkt zum Fügen des Werkstückoberteils 2 mit der Fügekontur 4 des Werkstückunterteils 3 bewegt wird, geht der Energiestrahl 10 bei der in der Figur 3 gezeigten alternativen Suchnaht 5, 6 ohne Unterbrechung in die Fügenaht über.

Bei der Erzeugung der Suchnähte 5, 6 der Figur 1 kann der Energiestrahl 10 die Werkstückoberseite 2 bereits punktuell mit der Fügekontur 4 der Werkstückunterseite verbinden. Dadurch ist das Werkstück bereits stoffschlüssige vorfixiert und kann in der vorfixierten Position entlang der Fügekontur 4 gefügt werden.

Der Energiestrahl 10 kann mit der gleichen Energie und gleicher Geschwindigkeit die Suchnaht 5, 6 und die Fügenaht erzeugen. Die Suchnaht 5, 6 kann aber auch mit einer Energie erzeugt werden, die größer oder geringer ist, als die Energie zum Erzeugen der Fügenaht, und/oder mit einer Geschwindigkeit, die kleiner oder größer ist, als die Geschwindigkeit zum Erzeugen der Fügenaht.

Die Figur 5 zeigt eine beispielhafte Anordnung einer stationären Fügestation 13 mit einem Industrieroboter 16. Der Industrieroboter 16 umfasst einen Roboterarm 15, der einen Werkzeugkopf 14 trägt. Mit dem Werkzeugkopf verbunden sind die den Energiestrahl 10 abgegebene Vorrichtung 10a und der Detektor 11 verbunden.

Die Vorrichtung 10a ist über eine Leitung L_{E} mit einer Energiequelle 17 verbunden, die die Energie für den Energiestrahl 10 erzeugt oder zur Verfügung stellt, und über eine Leitung L1 mit einem Rechner 18, der zum Beispiel die Bewegungen des Energiestrahls 10 steuert und die Energie des Energiestrahls regelt.

Der Detektor 11 ist über eine Leitung L2 mit dem Rechner 18 verbunden und sendet die erfassten Parameterdaten, die typisch für die Schweißnaht sind, egal ob Such- 5, 6 oder Fügenaht, an den Rechner 18.

Der Rechner umfasst einen Speicher 19, in dem für das zu bearbeitende Werkzeug eine Soll-Position des Werkzeugoberteils 2 zum Werkzeugunterteil 3 und eine Soll-Fügebahn für den Energiestrahl 10 zum Fügen des Werkstückoberteils 2 mit dem Werkstückunterteil 3 abgespeichert ist. Der Rechner 18 kann die vom Detektor 11 erfassten Daten mit den Soll-Positionsdaten des Werkstücks vergleichen. Stellt der Rechner 18 anhand der vom Detektor 11 erfassten Übergänge oder Kontaktpunkte 7, 8 Abweichungen der erfassten Ist-Position der Fügekontur 4 am Werkstückunterteil 3 von der im Rechner 18 abgespeicherten Soll-Position der Fügestruktur, respektive des Werkstückunterteils 3, fest kann er mittels eines im Rechner 18 abgespeicherten Algorithmus die Soll-Fügebahn für den Energiestrahl 10 korrigieren, sodass der Energiestrahl 10 jetzt vom Rechner 18 entlang dem erfassten Ist-Verlauf der Fügekontur 4 geführt werden kann.

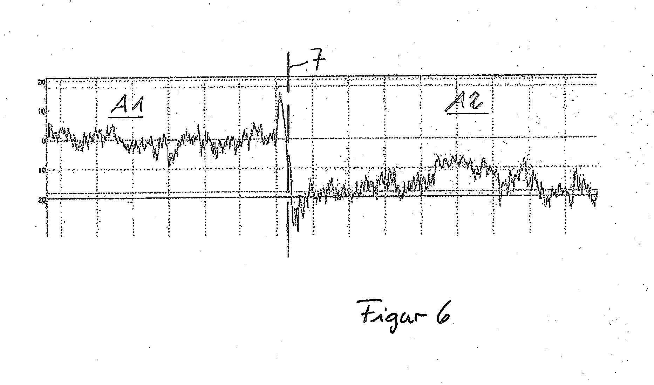

Die Figur 6 zeigt einen typischen Verlauf eines von dem Detektor 11 erfassten Parameters der Suchnaht 5, 6 beim Übergang von dem Flächenbereich A1 des Werkstückoberteils 2, der keinen Kontakt mit dem Werkstückunterteil 3 hat, in den Flächenbereich A2, in dem das Werkstückoberteil 2 die Fügekontur 4 des Werkstückunterteils 3 kontaktiert. Am Übergang von dem Flächenbereich A1 in den Flächenbereich A2 ändert sich der vom Detektor 11 erfasste Parameter sprungartig.

Da der Punkt auf der Oberseite 2a des Werkstückoberteils 2, an dem der Energiestrahl 10 mit der Erzeugung der Suchnaht 5, 6 beginnt, von dem Rechner 18 erfasst und registriert wird, respektive vorgegeben und im Rechner 18 gespeichert ist, und die Richtung und die Geschwindigkeit in/mit der sich der Energiestrahl 10 beim Erzeugen der Suchnaht 5, 6 bewegt vorgegeben und im Rechner 18 gespeichert sind, kann der Rechner 18 aufgrund dieser sprungartigen Parameteränderung den Kontaktpunkt 7, 8 registrieren und aufgrund des einen registrierten Kontaktpunktes 7, 8 oder mehrerer registrierter Kontaktpunkte 7, 8 eine Korrektur für die Fügebahn des Energiestrahls 11 berechnen.

Gleichwohl in der vorangegangenen Beschreibung einige mögliche Ausführungen der Erfindung offenbart wurden, versteht es sich, dass zahlreiche weitere Varianten von Ausführungen durch Kombinationsmöglichkeiten aller genannten und ferner aller dem Fachmann naheliegenden technischen Merkmale und Ausführungsformen existieren. Es versteht sich ferner, dass die Ausführungsbeispiele lediglich als Beispiele zu verstehen sind, die den Schutzbereich, die Anwendbarkeit und die Konfiguration in keiner Weise beschränken. Vielmehr möchte die vorangegangene Beschreibung dem Fachmann einen geeigneten Weg aufzeigen, um zumindest eine beispielhafte Ausführungsform zu realisieren.

### Bezugszeichenliste

- 1: Werkstück
- 2: Werkstückoberteil
- 2a: Oberseite
- 3: Werkstückunterteil
- 4: Fügekontur
- 5,5': Suchnaht
- 6: Suchnaht
- 7: Kontaktpunkt, Übergang
- 8: Kontaktpunkt, Übergang
- 9: Fügestation
- 10: Energiestrahl
- 10a: Vorrichtung
- 11: Detektor
- 12: Rechner
- 13: Speicher
- 14: Werkzeugkopf
- 15: Roboterarm
- 16: Industrieroboter
- 17: Energiequelle
- A1: Flächenbereich
- A2: Flächenbereich
- L1: Leitung
- L2: Leitung
- L_{E}: Leitung

## Patentansprüche

1. Verfahren zum Fügen verdeckter Werkstückteile mittels eines Energiestrahls (3), bei dem
a) wenigstens ein Werkstückunterteil (3) und wenigstens ein Werkstückoberteil (2) relativ zueinander positioniert werden,
b) das wenigstens eine Werkstückoberteil (2) das wenigstens eine Werkstückunterteil (3) im positionierten Zustand längs einer Fügekontur (4) des wenigstens einen Werkstückunterteils (3) kontaktiert und die Fügekontur (4), deren Soll-Verlauf einer Steuerung in Bezug auf ein Koordinatensystems bekannt ist, verdeckt,
c) der Energiestrahl (10) auf eine von dem wenigstens einen Werkstückunterteil (3) abgewandte Oberseite (2a) des wenigstens einen Werkstückoberteils (2) gerichtet und von einer Steuerung längs der Fügekontur (4) bewegt wird, um das wenigstens eine Werkstückoberteil (2) mit der Fügekontur (4) stoffschlüssig zu fügen, **dadurch gekennzeichnet, dass**
d) mit dem Energiestrahl (10) eine Suchnaht (5, 5', 6) auf der Oberseite (2a) des wenigstens einen Werkstückoberteils (2) zur Detektion der Fügekontur (4) erzeugt wird,
e) mittels eines Detektors (11) ein Übergang (7, 8) detektiert wird, an dem ein Flächenbereich (A1) des wenigstens einen Werkstückoberteils (2), der keinen Kontakt mit dem wenigstens einen Werkstückunterteil (3) hat, an einen Flächenbereich (A2) des wenigstens einen Werkstückoberteils (2), der einen Kontakt mit der Fügekontur (4) hat, grenzt,
f) von der Steuerung eine Position des Übergangs (7, 8) registriert und mit einer in der Steuerung abgespeicherten Soll-Position des Übergangs (7, 8) verglichen wird, und
g) bei einer abweichenden Position des Übergangs (7, 8) eine Bewegung des Energiestrahls (10) längs der Fügekontur korrigiert (4) wird.

2. Verfahren nach Anspruch 1, wobei die Suchnaht (5, 6) sich von dem Flächenbereich (A1) des wenigstens einen Werkstückoberteils (2), der keinen Kontakt zu dem wenigstens einen Werkstückunterteil (3) hat, über den Flächenbereich (A2) des wenigstens einen Werkstückoberteils (2), der Kontakt mit der Fügekontur (4) hat, in einem weiteren Flächenbereich (A1) des wenigstens einen Werkstückoberteils (2), der keinen Kontakt zu dem wenigstens einen Werkstückunterteil (3) hat, erstreckt und die Steuereinheit die Positionen der beiden Übergänge (7, 8) registriert.

3. Verfahren nach einem der vorgehenden Ansprüche, wobei von dem Detektor (11) ein für die Suchnaht (5, 5', 6) charakteristischer Parameter, insbesondere ein physikalischer oder chemischer Parameter, detektiert und überwacht wird.

4. Verfahren nach dem vorgehenden Anspruch, wobei von dem Detektor (11) detektierte Werte des Parameters sich an dem Übergang (7, 8) sprungartig verändern.

5. Verfahren nach einem der vorgehenden Ansprüche, wobei von dem Energiestrahl (10) wenigstens zwei oder drei beabstandete Suchnähte (5, 6) auf der Oberseite (2a) des wenigstens einen Werkstückoberteils (2) erzeugt und von dem Detektor (11) überwacht werden.

6. Verfahren nach einem der Ansprüche 1 bis 4, wobei eine Bewegung des Energiestrahls (10) nach dem Registriereren des ersten oder des ersten und des zweiten Übergangs (7, 8) korrigiert wird und die Suchnaht (5') ohne Unterbrechung der Bewegung des Energiestrahls (10) in eine Fügenaht längs der Fügekontur (4) übergeht.

7. Verfahren nach dem vorgehenden Anspruch, wobei der Energiestrahl (10) durch die Steuerung in einer mäanderförmigen Bewegung auf einen Ist-Verlauf der Fügestruktur (4) eingependelt wird.

8. Verfahren nach einem der Ansprüche 5 bis 7, wobei von der Steuerung die Positionen der Übergänge (7, 8) registriert und mit den in der Steuerung abgespeicherten Positionen der Übergänge (7, 8) verglichen werden, und bei einer abweichenden Position wenigstens eines der Übergänge (7, 8) die Bewegung des Energiestrahls längs der Fügekontur (4) korrigiert wird.

9. Verfahren nach einem der vorgehenden Ansprüche, wobei die Suchnaht/Suchnähte (5, 5', 6) schräg oder quer zu der Fügekontur (4) erzeugt wird/werden.

10. Verfahren nach einem der vorgehenden Ansprüche, wobei beim Erzeugen der Suchnaht/Suchnähte (5, 5', 6) das wenigstens eine Werkstückoberteil (2) mit der Fügekontur (4) des wenigstens einen Werkstückunterteils (3) wenigstens punktuell stoffschlüssig verbunden wird.

11. Verfahren nach einem der vorgehenden Ansprüche, wobei es sich bei dem Detektor (11) um einen Detektor (11) eines Qualitätsüberwachungssystems für Fügenähte handelt.

12. Verfahren nach einem der vorgehenden Ansprüche, wobei es sich bei dem wenigstens einen Parameter um eine Wärme oder Temperatur, eine Leuchtintensität, eine Wellenlänge, eine Stromstärke oder einen andere charakteristischen Fügeparameter handelt.

13. Verfahren nach einem der vorgehenden Ansprüche, wobei es sich bei dem Fügeverfahren um ein Schweiß-, Löt- oder Klebeverfahren handelt.

14. Verfahren nach dem vorgehenden Anspruch, wobei das Schweißverfahren ein Lichtbogenschweißverfahren mit abschmelzender Elektrode, ein Laserschweißverfahren, ein Hochfrequenz-Induktions-Schweißverfahren oder ein Plasmaschweißverfahren ist.

15. Verfahren nach einem der vorgehenden Ansprüche, wobei das Werkstückunterteil (3) ein Teil einer Kraftfahrzeugstruktur oder einer Kraftfahrzeugkarosserie und das Werkstückoberteil (4) ein Teil einer Kraftfahrzeugstruktur oder einer Kraftfahrzeugkarosserie ist.

16. Verfahren nach einem der vorgehenden Ansprüche, wobei das wenigstens eine Werkstückunterteil (3) und/oder das wenigstens eine Werkstückoberteil (2) zum Fügen in eine Fügestation (9) eingelegt und bevorzugt in der Fügestation (9) oder vor dem Einlegen in die Fügestation (9) relativ zueinander fixiert werden, oder das wenigstens eine Werkstückoberteil (2) und das wenigstens eine Werkstückunterteil (3) von jeweils einem Roboterarm gehalten und mittels der Roboterarme relativ zueinander positioniert werden, wobei die Fügestation (9) eine stationäre Fügestation (9) ist oder eine mit einem Roboterarm (15) verbundene Fügestation (9), die beim oder zum Fügen durch den Roboterarm (15) im Raum bewegt wird.

17. Verfahren nach einem der vorgehenden Ansprüche, wobei wenigstens ein strahlabgebender Teil einer den Energiestrahl (19) erzeugenden Anlage (10a) und/oder der Detektor (11) an einem Roboterarm (15) befestigt ist/sind.

## Claims

1. A method for joining concealed workpiece parts by means of an energy beam (10), wherein:
a) at least one lower workpiece part (3) and at least one upper workpiece part (2) are positioned relative to each other;
b) when positioned, the at least one upper workpiece part (2) contacts the at least one lower workpiece part (3) along a joining contour (4) of the at least one lower workpiece part (3) and conceals the joining contour (4), the target profile of which is known to a controller in relation to a co-ordinate system;
c) the energy beam (10) is directed onto an upper side (2a) of the at least one upper workpiece part (2), which faces away from the at least one lower workpiece part (3), and is moved along the joining contour (4) by a controller, in order to join the at least one upper workpiece part (2) to the joining contour (4) in a material lock;
**characterised in that:**
d) using the energy beam (10), an exploratory seam (5, 5', 6) is produced on the upper side (2a) of the at least one upper work piece part (2), for detecting the joining contour (4);
e) by means of a detector (11), a boundary (7, 8) is detected at which a surface area (A1) of the at least one upper work piece part (2) which does not have any contact with the at least one lower work piece part (3) borders a surface area (A2) of the at least one upper work piece part (2) which does have contact with the joining contour (4);
f) the controller registers a position of the boundary (7, 8) and compares it with a target position of the boundary (7, 8) which is stored in the controller; and
g) if the position of the boundary (7, 8) deviates, a movement of the energy beam (10) along the joining contour (4) is corrected.

2. The method according to Claim 1, wherein the exploratory seam (5, 6) extends from the surface area (A1) of the at least one upper work piece part (2) which does not have any contact with the at least one lower work piece part (3), over the surface area (A2) of the at least one upper work piece part (2) which does have contact with the joining contour (4), into another surface area (A1) of the at least one upper work piece part (2) which does not have any contact with the at least one lower work piece part (3), and the controller registers the positions of the two boundaries (7, 8).

3. The method according to any one of the preceding claims, wherein a parameter which is characteristic of the exploratory seam (5, 5', 6), in particular a physical or chemical parameter, is detected and monitored by the detector (11).

4. The method according to the preceding claim, wherein values of the parameter which are detected by the detector (11) change abruptly at the boundary (7, 8).

5. The method according to any one of the preceding claims, wherein at least two or three spaced exploratory seams (5, 6) are produced on the upper side (2a) of the at least one upper work piece part (2) and are monitored by the detector (11).

6. The method according to any one of Claims 1 to 4, wherein a movement of the energy beam (10) is corrected once the first or the first and second boundary (7, 8) has/have been registered, and the exploratory seam (5') transitions into a joining seam along the joining contour (4) without interrupting the movement of the energy beam (10).

7. The method according to the preceding claim, wherein the energy beam (10) is stabilised to an actual profile of the joining contour (4) by the controller in a meandering movement.

8. The method according to any one of Claims 5 to 7, wherein the positions of the boundaries (7, 8) are registered by the controller and compared with the positions of the boundaries (7, 8) which are stored in the controller, and if the position of at least one of the boundaries (7, 8) deviates, the movement of the energy beam along the joining contour (4) is corrected.

9. The method according to any one of the preceding claims, wherein the exploratory seam/s (5, 5', 6) is/are produced obliquely or transverse to the joining contour (4).

10. The method according to any one of the preceding claims, wherein when the exploratory seam/s (5, 5', 6) is/are being produced, the at least one upper work piece part (2) is connected, at least at points, to the joining contour (4) of the at least one lower work piece part (3) in a material lock.

11. The method according to any one of the preceding claims, wherein the detector (11) is a detector (11) of a quality monitoring system for joining seams.

12. The method according to any one of the preceding claims, wherein the at least one parameter is a heat energy or temperature, a light intensity, a wavelength, a current rating or another characteristic joining parameter.

13. The method according to any one of the preceding claims, wherein the joining method is a welding method, a soldering method or an adhering method.

14. The method according to the preceding claim, wherein the welding method is an electric arc welding method using a melting electrode, a laser welding method, a high-frequency induction welding method or a plasma welding method.

15. The method according to any one of the preceding claims, wherein the lower work piece part (3) is a part of a motor vehicle structure or a motor vehicle body, and the upper work piece part (2) is a part of a motor vehicle structure or a motor vehicle body.

16. The method according to any one of the preceding claims, wherein the at least one lower work piece part (3) and/or the at least one upper work piece part (2) are placed in a joining station (9) in order to be joined and are preferably fixed relative to each other in the joining station (9) or before they are placed in the joining station (9), or the at least one upper work piece part (2) and the at least one lower work piece part (3) are held by a robot arm each and positioned relative to each other by means of the robot arms, wherein the joining station (9) is a stationary joining station (9) or a joining station (9) which is connected to a robot arm (15) and spatially moved by the robot arm (15) during or for joining.

17. The method according to any one of the preceding claims, wherein at least a beam-emitting part of a system (10a) which produces the energy beam (10) and/or the detector (11) is/are affixed to a robot arm (15).

## Revendications

1. Procédé pour assembler des parties de pièce masquées au moyen d'un faisceau d'énergie (10), comportant les étapes consistant à :
a) positionner au moins une partie inférieure de pièce (3) et au moins une partie supérieure de pièce (2) l'une par rapport à l'autre,
b) mettre en contact ladite au moins une partie supérieure de pièce (2) avec ladite au moins une partie inférieure de pièce (3) à l'état positionné le long d'un contour d'assemblage (4) de ladite au moins une partie inférieure de pièce (3) et masquer le contour d'assemblage (4) dont le tracé de consigne par rapport à un système de coordonnées est connu d'une unité de commande,
c) diriger le faisceau d'énergie (10) vers une face supérieure (2a) de ladite au moins une partie supérieure de pièce (2) opposée à ladite au moins une partie inférieure de pièce (3), et le déplacer au moyen d'une unité de commande le long du contour d'assemblage (4) afin d'assembler par adhérence de matière ladite au moins une partie supérieure de pièce (2) avec le contour d'assemblage (4), **caractérisé par** les étapes consistant à
d) générer, à l'aide du faisceau d'énergie (10), une jonction exploratoire (5, 5', 6) sur la face supérieure (2a) de ladite au moins une partie supérieure de pièce (2) afin de détecter le contour d'assemblage (4),
e) détecter, au moyen d'un détecteur (11), une transition (7, 8) au niveau de laquelle une zone de surface (**A1**) de ladite au moins une partie supérieure de pièce (2) qui n'est pas en contact avec ladite au moins une partie inférieure de pièce (3), borde une zone de surface (A2) de ladite au moins une partie supérieure de pièce (2) qui est en contact avec le contour d'assemblage (4),
f) enregistrer une position de la transition (7, 8) par l'intermédiaire de l'unité de commande et la comparer à une position de consigne de la transition (7, 8) enregistrée dans l'unité de commande, et
g) en cas de variation de position de la transition (7, 8), corriger un mouvement du faisceau d'énergie (10) le long du contour d'assemblage (4).

2. Procédé selon la revendication 1, dans lequel la jonction exploratoire (5, 6) s'étend à partir de la zone de surface (A1) de ladite au moins une partie supérieure de pièce (2) qui n'est pas en contact avec ladite au moins une partie inférieure de pièce (3), à travers la zone de surface (A2) de ladite au moins une partie supérieure de pièce (2) qui est en contact avec le contour d'assemblage (4), jusqu'à une zone de surface supplémentaire (A1) de ladite au moins une partie supérieure de pièce (2) qui n'est pas en contact avec ladite au moins une partie inférieure de pièce (3), et l'unité de commande enregistre les positions des deux transitions (7, 8).

3. Procédé selon l'une des revendications précédentes, dans lequel le détecteur (11) détecte et surveille un paramètre caractéristique de la jonction exploratoire (5, 5', 6), en particulier un paramètre physique ou chimique.

4. Procédé selon la revendication précédente, dans lequel des valeurs du paramètre détectées par le détecteur (11) changent par à-coup au niveau de la transition (7, 8).

5. Procédé selon l'une des revendications précédentes, dans lequel au moins deux ou trois jonctions exploratoires espacées (5, 6) sont générées sur la face supérieure (2a) de ladite au moins une partie supérieure de pièce (2) par le faisceau d'énergie (10) et surveillées par le détecteur (11).

6. Procédé selon l'une des revendications 1 à 4, dans lequel un mouvement du faisceau d'énergie (10) est corrigé après l'enregistrement de la première ou de la première et de la seconde transition (7, 8) et la jonction exploratoire (5') se prolonge sans interrompre le mouvement du faisceau d'énergie (10) dans une jonction exploratoire le long du contour d'assemblage (4).

7. Procédé selon la revendication précédente, dans lequel le faisceau d'énergie (10) est stabilisé sur un tracé réel du contour d'assemblage (4), par l'unité de commande en suivant un mouvement sinueux.

8. Procédé selon l'une des revendications 5 à 7, dans lequel les positions des transitions (7, 8) sont enregistrées par l'unité de commande et comparées aux positions des transitions (7, 8) enregistrées dans l'unité de commande, et en cas de variation de position d'au moins une des transitions (7, 8), le mouvement du faisceau d'énergie est corrigé le long du contour d'assemblage (4).

9. Procédé selon l'une des revendications précédentes, dans lequel la jonction/les jonctions exploratoires (5, 5', 6) sont générées en oblique ou transversalement au contour d'assemblage (4).

10. Procédé selon l'une des revendications précédentes, dans lequel pendant la génération de la jonction/des jonctions exploratoires (5, 5', 6), ladite au moins une partie supérieure de pièce (2) est reliée par adhérence de matière, de manière au moins ponctuelle, au contour d'assemblage (4) de la au moins une partie inférieure de pièce (3).

11. Procédé selon l'une des revendications précédentes, dans lequel le détecteur (11) est un détecteur (11) d'un système de contrôle qualité des jonctions d'assemblage.

12. Procédé selon l'une des revendications précédentes, dans lequel le au moins un paramètre est une chaleur ou une température, une intensité lumineuse, une longueur d'onde, une intensité de courant ou un autre paramètre d'assemblage caractéristique.

13. Procédé selon l'une des revendications précédentes, dans lequel le procédé d'assemblage est un procédé de soudage, de brasage ou de collage.

14. Procédé selon la revendication précédente, dans lequel le procédé de soudage est un procédé de soudage à l'arc avec électrode fusible, un procédé de soudage au laser, un procédé de soudage par induction à haute fréquence ou un procédé de soudage au plasma.

15. Procédé selon l'une des revendications précédentes, dans lequel la partie inférieure de pièce (3) est une pièce d'une structure de véhicule automobile ou d'une carrosserie de véhicule automobile, et la partie supérieure de pièce (2) est une pièce d'une structure de véhicule automobile ou d'une carrosserie de véhicule automobile.

16. Procédé selon l'une des revendications précédentes, dans lequel ladite au moins une partie inférieure de pièce (3) et/ou ladite au moins une partie supérieure de pièce (2) est introduite dans une station d'assemblage (9) en vue d'un assemblage et sont de préférence fixées l'une par rapport à l'autre dans la station d'assemblage (9) ou avant l'introduction dans la station d'assemblage (9), ou ladite au moins une partie supérieure de pièce (2) et ladite au moins une partie inférieure de pièce (3) sont respectivement maintenues par un bras de robot et sont positionnées l'une par rapport à l'autre au moyen des bras de robot, dans lequel la station d'assemblage (9) est une station d'assemblage fixe (9) ou une station d'assemblage (9) reliée à un bras de robot (15) qui est déplacée dans l'espace lors de ou pour l'assemblage par le bras de robot (15).

17. Procédé selon l'une des revendications précédentes, dans lequel au moins une partie émettrice de faisceau d'une installation (10a) générant le faisceau d'énergie (10) et/ou le détecteur (11) est/sont fixés sur un bras de robot (15).
